# EUROPEAN PATENT APPLICATION

(11) **EP 1 894 614 A1**
(43) Date of publication of application: **05.03.2008**
(21) Application number: 07114714.4
(22) Date of filing: 21.08.2007
(51) Int. Cl.: B01D 71/56, B01D 69/10, B01D 67/00

(54) **Oxidation-resistant composite reverse osmosis membrane**

(30) Priority: 25.08.2006 CN 200610051200
(71) Applicant: Vontron Membrane Technology Co Ltd, Guiyang 555018 (CN)
(72) Inventor: Zhao, Xiaoyang, 550017, Guiyang (CN); He, Yaohua, Baiyun District Guiyang Guizhou 550017 (CN); Wu, Zongee, Baiyun District Guiyang Guizhou 550017 (CN); Cai, Zhiqi, 550017, Guiyang (CN); Wang, Siliang, 550017, Guiyang (CN); Long, Changyu, 550017, Guiyang (CN); Liu, Feng, 550017, Guiyang (CN)
(74) Representative: Cabinet Plasseraud

(57) **Abstract**

Disclosed is a oxidation resistant composite reverse osmosis membrane, comprising a porous support and a polyamide layer, in which the polyamide layer is modified by an agent so that the membrane retains a salt rejection of at least 85% after being subjected to an aqueous solution of NaClO having a concentration of about 2,000 to 30,000ppm for about one hour. A process of preparing the membrane is also disclosed.

## Description

### CROSS-REFERENCE OF RELATED APPLICATIONS

The present application claims the benefits of Chinese application No. 200610051200.5, filed on August 25, 2006, entitled "an oxidation-resistant composite reverse osmosis membrane," which is explicitly incorporated herein by reference in its entirety.

### TECHNICAL BACKGROUND OF THE INVENTION

### 1. Technical Field

The present invention relates to a reverse osmosis membrane, and more particularly relates to a novel composite reverse osmosis membrane comprising a modified polyamide layer, and processes for preparing the same.

### 2. Description of Related Art

Reverse osmosis technique is used for separating dissolved substances from a solution by a semi-permeable membrane having selective permeability to specified molecules, i.e. a reverse osmosis membrane (RO membrane), under a pressure in excess of the osmotic pressure of the solution. Therefore, reverse osmosis has been widely used in the purification and concentration of liquids, especially in water treatment, where contaminants such as inorganic ions, bacterium, viruses, organic and colloidal substances are need to be removed from raw water by reverse osmosis so as to obtain highly purified water.

A composite membrane is one of reverse osmosis membranes comprising a porous support and a thin polyamide layer formed on the support. Typically, the polyamide layer is formed by an interfacial polymerization of a polyfunctional amine and a polyfunctional acid halide.

US patent 4,277,344 discloses a composite polyamide reverse osmosis membrane that is an interfacial reaction product of an aromatic polyfunctional amine having at least two primary amino substituents with an aromatic acid halide having at least three acid halide substituents.

In US patent No. 4,983,291, there is disclosed a composite reverse osmosis membrane prepared by contacting a porous support, in series, with an aqueous solution of a polyfunctional amine and an organic solution of a polyfunctional acid halide, and then treating with an acid or a salt before drying.

US patent No. 6,723,422 discloses a membrane prepared by i) forming a layer by coating on a porous support a solution A comprising one or more compounds having at least two reactive amino groups; ii) contacting this layer with a solution B comprising one or more polyfunctional acid halide compounds; and iii) further contacting the layer with another solution C comprising one or more polyfunctional acid halide compounds in a concentration higher than the solution B in order to form a polyamide skin layer on the porous support.

US patent publication No. 2006-219,628 discloses a polyamide membrane comprising a reaction product of (i) an aqueous solution comprising a polyfunctional amine; and (ii) an organic solution comprising an amine-reactive reactant selected from the group consisting of a polyfunctional acid halide, a polyfunctional sulfonyl halide and a polyfunctional isocyanate, in which the organic solvent solution further comprises at least one polar ether compound.

All references as mentioned above are explicitly incorporated herein by reference in their entireties.

However, current polyamide RO membranes have a defect that they will be contaminated by organic or inorganic substances presented in water after being used in water treatment for a short period of time. For example, contaminants presented in the raw water such as inorganic ions, bacterium, viruses, organic and colloidal substances will be adsorbed onto the membrane, thereby forming colloidal fouling and/or biofouling on the membrane, which will greatly reduce the water flux of the membrane. Moreover, current RO membranes are very sensitive to oxidizing substances, which will greatly deteriorate the performances of the membrane at a relatively low concentration and cause a rapid decrease of the salt rejection of the membrane. As most water resources are contaminated, some of which may be pre-treated waste water, the raw water to be treated using a RO membrane always comprises a large amount of oxidizing bactericides. Consequently, current RO membranes used in the treatment of such raw water usually have a short life-span, and need to be replaced frequently, which will increase the cost of the treatment while decreasing the efficiency of the membranes.

### SUMMARY OF THE INVENTION

In consideration of the defects of the reverse osmosis membranes in the art, the present invention provides a novel composite reverse osmosis membrane having excellent resistance to oxidation and organic fouling, and processes for its preparation.

According to an aspect of the invention, there is provided a reverse osmosis membrane comprising:
a) a porous support, and
b) a polyamide layer formed on the support,
in which the polyamide layer is modified by an agent so that the membrane retains a salt rejection of at least 85% preferably at least 90%, more preferably at least 95%, and most preferably at least 98%, after being subjected to an oxidizing substance of about 2,000 to 30,000ppm for about one hour after being subjected to an aqueous solution of NaClO having a concentration of about 2,000 to 30,000ppm for about one hour.

In a particular embodiment of the invention, the agent is a persulfate and the polyamide layer is modified after being prepared.

In another particular embodiment of the invention, the agent is a polyfunctional haloaryl acid halide and the polyamide layer is modified during the preparation thereof.

According to another aspect of the invention, there is provided a reverse osmosis membrane comprising:
a) a porous support, and
b) a polyamide layer formed on the support,
in which the polyamide layer is modified by a persulfate.

In a preferred embodiment of the invention, the polyamide layer is formed by a reaction of a polyfunctional amine with a polyfunctional acid halide reagent. More preferably, the polyfunctional acid halide reagent comprises a polyfunctional haloaryl acid halide.

According to still another aspect of the invention, there is provided a reverse osmosis membrane comprising:
a) a porous support, and
b) a polyamide layer formed on the support,
in which the polyamide layer is formed by a reaction of a polyfunctional amine with a polyfunctional acid halide reagent comprising a polyfunctional haloaryl acid halide.

According to a further aspect of the invention, there is provided a process for preparing a reverse osmosis membrane that can retain a salt rejection of at least 85%, preferably at least 90%, more preferably at least 95%, and most preferably at least 98%, after being subjected to an aqueous solution of NaClO having a concentration of about 2,000 to 30,000ppm for about one hour. The process comprises:
i) providing a porous support,
ii) forming a polyamide layer on the support, and
iii) modifying the polyamide layer with an agent.

In a particular embodiment of the invention, the agent is a persulfate and the polyamide layer is modified after being prepared.

In another particular embodiment of the invention, the agent is a polyfunctional haloaryl acid halide and the polyamide layer is modified during the preparation thereof.

According to a still further aspect of the invention, there is provided a process for preparing a reverse osmosis membrane, comprising:
i) providing a porous support,
ii)forming a polyamide layer on the support, and
iii) modifying the polyamide layer with a persulfate.

According to a still further aspect of the invention, there is provided a process for preparing a reverse osmosis membrane, comprising:
i) providing a porous support, and
ii) forming a polyamide layer on the support by a reaction of a polyfunctional amine with a polyfunctional acid halide reagent comprising a polyfunctional haloaryl acid halide.

In a preferred embodiment of the invention, the process further comprises:
iii) modifying the polyamide layer with a persulfate.

According to a still further aspect of the invention, there is provided a process for improving performances of a reverse osmosis membrane comprising a polyamide layer, which comprises modifying the polyamide layer with a persulfate.

In comparison with conventional RO membranes in the art, the RO membrane of the invention has improved resistance to oxidation and organic fouling, and a longer life-span under working conditions. Furthermore, the RO membrane of the invention has relatively higher salt rejection and water flux, can be easily prepared and employed, and can be washed at relatively longer intervals. The RO membrane of the invention is suitable for use in water treatment as well as other fields involving reverse osmosis.

### DETAILED DESCRIPTION OF THE INVENTION

The porous support used in the present invention is not critical thereto, and is typically a microporous support. Particular microporous supports suitable for use in the present invention may be polymeric materials having pore sizes sufficient to permit the passage of permeate therethrough but not large enough to interfere with the bridging over of the polyamide membrane formed thereon. The pore size of the support generally ranges from 1 to 500 nm, and preferably from 1 to 300nm. Examples of microporous supports of the present invention include, but are not limited to, those made of a polysulfone, a polyether sulfone, a polyimide, a polyamide, a polypropylene and various halogenated polymers, such as polyvinylidene fluoride. Additional microporous support materials may be found in the references as cited herein.

Preferably, the porous support employed is a polysulfone film, which may be reinforced with a non-woven fabric. Any conventional non-woven fabrics that are suitable for use in reverse osmosis membranes can be employed in the present invention.

The thickness of the microporous support is not critical to the present invention which generally ranges from about 25 to about 125µm, preferably from about 40 to about 75µm.

The polyfunctional amine used in the present invention is not critical thereto, and may be a single polyfunctional amine or a combination thereof. Preferable polyfunctional amines used are essentially a monomeric amine having at least two amine functional groups, more preferably 2 to 3 amine functional groups. The amine functional group is typically a primary or secondary amine functional group, preferably a primary amine functional group.

Suitable polyfunctional amines that can be used in the present invention include, but are not limited to, aromatic polyfunctional amine, such as m-phenylenediamine (MPDA), p-phenylenediamine, 1,3,5-triaminobenzene, 1,2,4,-triaminobenzene, 3,5-diamino benzoic acid, 2,4-diaminotoluene, 2,4-diaminoanisole, amidol and xylenediamine; aliphatic polyfunctional amines, such as ethylenediamine, propylenediamine, and tris(2-aminoethyl)amine; and alicyclic polyfunctional amine, such as 1,3-diaminocyelohexane, 1,2-diaminocyclohexane, 1,4-diaminocyclohexane, piperazine, 2,5-dimethylpiperazine, and 4-aminomethylpiperazine. Other suitable polyfunctional amines may be found in the references as cited herein. A preferred polyfunctional amine used in the present invention is an aromatic primary diamine, and more preferably it is m-phenylenediamine.

In a particular embodiment of the invention, the polyfunctional amine used is in the form of an aqueous solution. The concentration of the polyfunctional amine in the aqueous solution is not critical, and typically ranges from about 0.1 to 20wt%, more preferably from 0.5 to 8wt%, and further more preferably from 0.5 to 5wt%.

The aqueous polyfunctional amine solution may further contain an additive to facilitate formation of a membrane or to improve the properties of the obtained composite reverse osmosis membrane. Suitable additives include, but are not limited to, polymers such as polyvinyl alcohol, polyvinyl pyrrolidone and polyacrylic acid; polyhydric alcohols such as sorbitol and glycerol; amine salts, such as tetra-alkyl ammonium halide or salts of trialkyl amine with organic acids; surfactants such as sodium dodecylbenzene sulfonate, sodium dodecyl sulfate, and sodium lauryl sulfate; and other ingredients as disclosed in US patent No. 6,723,422. Preferably, the polyfunctional amine solution further contains a surfactant, more preferably sodium dodecylbenzene sulfonate, which is effective in improving the absorption of the polyfunctional amine solution onto the porous support. More preferably, the concentration of the surfactant in the aqueous solution is about 0.05-1% by weight.

Suitable polyfunctional acid halide reagents for use in the present invention include, but are not limited to, aromatic polyfunctional acid halides such as trimesoyl chloride (TMC), isophthaloyl chloride (IPC), terephthaloyl chloride (TPC), biphenyldicarboxylic acid chloride, naphthalenedicarboxylic acid dichloride, benzene trisulfonic acid chloride, benzene disulfonic acid chloride, chlorosulfonium benzene dicarboxylic acid chloride, 2-iodo-isophthaloyl chloride, 4-iodo-isophthaloyl chloride, 5-iodo-isophthaloyl chloride, and 6-iodo-isophthaloyl chloride; aliphatic polyfunctional acid halides such as propanetricarboxylic acid chloride, butanetricarboxylic acid chloride, pentanetricarboxylic acid chloride, glutaryl halides, and adipoyl halides; and alicyclic polyfunctional acid halides such as cyclopropanetricarboxylic acid chloride, cyclobutanctetracarboxylic acid chloride, cyclopentanetricarboxylic acid chloride, cyclopentanetetracarboxylic acid chloride, cyclohexanetricarboxylic acid chloride, tetrahydrofurantetracarboxylic acid chloride, cyclopentanedicarboxylic acid chloride, cyclobutanedicarboxylic acid chloride, cyclohexanedicarboxylic acid chloride, and tetrahydrofurandicarboxylic acid chloride, which may be used either alone or in a combination thereof.

Preferably, the polyfunctional acid halide reagent used is an aromatic polyfunctional acid halide, especially an aromatic polyfunctional acid chloride.

In some preferred embodiments of the invention, the polyfunctional acid halide reagent comprises a polyfunctional aryl acid halide, and more preferably a polyfunctional phenyl acid chloride, such as trimesoyl chloride, isophthaloyl chloride, and terephthaloyl chloride.

In other preferred embodiments of the invention, the polyfunctional acid halide reagent used comprises a polyfunctional haloaryl acid halide, and more preferably a polyfunctional haloaryl acid chloride.

In a further preferred embodiment of the invention, the polyfunctional haloaryl acid halide is about 5 to 100%, more preferably about 5 to 80%, and still more preferably 20 to 70% by weight of the polyfunctional acid halide reagent.

Preferably, the polyfunctional haloaryl acid halide used in the present invention is a polyfunctional halophenyl acid chloride, such as 2-iodo-isophthaloyl chloride, 4-iodo-isophthaloyl chloride, 5-iodo-isophthaloyl chloride, 6-iodo-isophthaloyl chloride, 2-bromo-isophthaloyl chloride, 4-bromo-isophthaloyl chloride, 5-bromo-isophthaloyl chloride, 6-bromo-isophthaloyl chloride, 2-iodo-terephthaloyl chloride, 2-bromo-terephthaloyl chloride or a mixture thereof.

In a particularly preferred embodiment of the invention, the polyfunctional acid halide reagent used comprises 0-95 parts by weight of trimesoyl chloride and 5-100 parts by weight of a polyfunctional halophenyl acid chloride.

In a further preferred embodiment of the invention, the polyfunctional acid halide reagent comprises 20-95 parts of trimesoyl chloride and 5-80 parts of a polyfunctional halophenyl acid chloride.

In a still further preferred embodiment of the invention, the polyfunctional acid halide reagent comprises 30-80 parts of trimesoyl chloride and 20-70 parts of a polyfunctional halophenyl acid chloride.

In particular embodiments of the invention, the polyfunctional acid halide reagent used is in the form of an organic solution. Typical concentration of the polyfunctional acid halide reagent in the solution ranges from 0.01 to 5wt%, and more preferably from 0.05 to 1 wt%.

Solvents that are preferably used in the organic solution of the acid halide reagent are organic solvents immiscible with water. Among the solvents, hydrocarbons such as hexane, heptane, octane, nonane, decane, and cyclohexane, and halogenated hydrocarbons such as carbon tetrachloride, trichlorotrifluoroethane, and difluorotetrachloroethane are especially preferred. Other suitable solvents may be found in the references as cited herein.

In preferred embodiments of the invention, the persulfate used is an inorganic persulfate, and more preferably is selected from the group consisting of persulfates of alkali metals and ammonium, such as potassium persulfate, ammonium persulfate, sodium persulfate and a mixture thereof.

In a preferred embodiment of the invention, the persulfate used is in the form of an aqueous solution at a concentration of 0.5-10wt% and a pH of 7.5-8.5. More preferably, the aqueous solution of persulfate is at a concentration of 0.5-3wt%.

In some preferred embodiments of the invention, the modification with persulfate is carried out for about 10-120 minutes.

To prepare a composite polyamide reverse osmosis membrane in accordance with the present invention, the above-described porous support is coated with the above-described aqueous polyfunctional amine solution, preferably utilizing either a hand coating or a continuous operation, and the excess solution is then removed from the support, preferably by rolling, sponging, air knifing or other suitable techniques. Following this, the coated support material is contacted, preferably by dipping or spraying, with the above-described organic solution of acid halide and allowed to remain in place for a period of time, preferably in the range of from about 5 seconds to about 10 minutes, more preferably about 20 seconds to 4 minutes. The resulting product is then dried, preferably by air-drying at a temperature ranging from room temperature to 100°C, and, if desired, further treated with a persulfate solution so as to obtain a composite reverse osmosis membrane of the invention.

Hereinafter, the invention will be illustrated in detail by the following examples, which, however, should be considered to be non-limiting to the present invention.

### EXAMPLES

The porous support used in the following Examples may be obtained according to any conventional method in the art, by spreading a 16% solution of polysulfone (P-3500 from Solvay Advanced Polymers, US, number average molecular weight 20,000-50,000) in DMF onto a non-woven cloth.

### Comparative Example

The porous support was immersed in a 2.5% solution of m-phenylenediamine containing 0.1 wt% of sodium dodecylbenzene sulfonate (SDBS) for about 1 min. The support was then drained and nip rolled to remove the excess aqueous solution. After that, the treated support was contacted with a 0.1% (wt/v) solution of trimesoyl chloride in ethylhexane for 50 seconds to form a polyamide layer, and then dried in an oven at a temperature of 40°C for 10 minutes to give a composite polyamide reverse osmosis membrane.

The initial performances of the obtained RO membrane were determined using a 2,000ppm solution of sodium chloride, pH 7.5, under 225psi. Then the membrane was immersed in a 2,000ppm solution of NaClO for 30 hours, and the performances of the treated membrane were determined again under the same conditions as described above. The results were shown in the following Table 1.

### Examples 1-2

Composite RO membranes as prepared in Comparative Example 1 were immersed in a 1% aqueous solution of potassium persulfate maintained at pH 8 by a potassium phosphate buffer for different times as shown in the following Table 1, and then dried in an oven at a temperature of 140°C for 5 minutes to give composite RO membranes of the invention. The performances of the RO membranes were determined as described in the Comparative Example 1, and the results were shown in Table 1.

**Table 1. Performances of RO Membranes**

| Items | Comparative Example 1 | Example 1 | Example 2 |
|---|---|---|---|
| Time for treatment with potassium persulfate (min) | ---- | 10 | 30 |
| Initial salt rejection (%) | 99.3 | 99.3 | 99.2 |
| Initial water flux (GFD) | 24.8 | 22.4 | 23.3 |
| After treatment with NaClO | | | |
| Salt rejection (%) | 5.8 | 86.9 | 98.8 |
| Water flux (GFD) | 562 | 43.2 | 28.7 |

It can be found from the data as shown in Table I that the oxidation resistance of the RO membranes was significantly improved by the treatment with potassium persulfate.

### Examples 3-8

The porous support was immersed in a 2.5% solution of m-phenylenediamine (MPDA) containing 0.1 wt% of sodium dodecylbenzene sulfonate (SDBS) for about 1 min. The support was then drained and nip rolled to remove the excess aqueous solution. After that, the treated support was contacted with a 0.1% (wt/v%) solution of acid chloride in ethylhexane as shown in the following Table 2 for 50 seconds, and then dried in an oven at a temperature of 40°C for 10 minutes to give a polyamide reverse osmosis membrane. The performances of the membrane were determined as described in Comparative Example 1, and the results were shown in Table 2.

**Table 2. Performances of RO Membranes as Prepared in Examples 3-8**

| Items | Ex. 3 | Ex. 4 | Ex. 5 | Ex. 6 | Ex. 7 | Ex. 8 |
|---|---|---|---|---|---|---|
| Total concentration of acid chloride | 0.1 | 0.1 | 0.1 | 0.1 | 0.1 | 0.1 |
| Relative concentration of TMC in the acid chloride (%) | 0 | 80 | 70 | 50 | 40 | 30 |
| Relative concentration of 5-iodo-isophthaloyl chloride (%) | 100 | 20 | 30 | 50 | 60 | 70 |
| Initial salt rejection (%) | 98.9 | 99.1 | 99.3 | 99.3 | 99.2 | 99.1 |
| Initial water flux (GFD) | 22.5 | 23.2 | 23.5 | 22.8 | 23.1 | 22.9 |
| After treatment with NaClO | | | | | | |
| Salt rejection (%) | 86.3 | 89.5 | 90.4 | 93.8 | 92.2 | 90.8 |
| Water flux (GFD) | 61.2 | 44.3 | 40.1 | 32.7 | 36.5 | 32.8 |

It can be found from the data as shown in Table 2 that by the addition of 5-iodo-isophthaloyl chloride, the change of the salt rejection and water flux of the RO membranes after treatment with NAClO was reduced, which indicates that the oxidation resistance of the membranes has been greatly improved.

### Example 9

An RO membrane was prepared according to the process as described in Example 6, except that the 5-iodo-isophthaloyl chloride was replaced by 2-iodo-terephthaloyl chloride. The performances of the membrane were determined as described in Comparative Example 1, and the results were shown in the following Table 3.

### Example 10

An RO membrane was prepared according to the process as described in Example 6, except that the 5-iodo-isophthaloyl chloride was replaced by 5-bromo-isophthaloyl chloride. The performances of the membrane were determined as described in Comparative Example 1, and the results were shown in the following Table 3.

### Example 11

An RO membrane was prepared according to the process as described in Example 6, except that the m-phenylenediamine was replaced by p-phenylenediamine. The performances of the membrane were determined as described in Comparative Example 1, and the results were shown in the following Table 3.

**Table 3. Performances of RO Membranes as Prepared in Examples 9-11**

| Items | Example 9 | Example 10 | Example 11 |
|---|---|---|---|
| Initial salt rejection (%) | 99.2 | 99.0 | 98.3 |
| Initial water flux (GFD) | 23.5 | 21.6 | 28.8 |
| After treatment with NaClO | | | |
| Salt rejection (%) | 92.8 | 91.6 | 95.6 |
| Water flux (GFD) | 35.4 | 38.4 | 48.3 |

### Examples 12-17

The porous support was immersed in a 2.5% solution of m-phenylenediamine (MPDA) containing 0.1wt% of sodium dodecylbenzene sulfonate (SDBS) for about 1 min. The support was then drained and nip rolled to remove the excess aqueous solution. After that, the treated support was contacted with a 0.1% (wt/v) solution of acid chloride in ethylhexane as shown in the following Table 4 for 50 seconds, and then dried in an oven at a temperature of 40°C for 10 minutes to give a polyamide reverse osmosis membrane.

The membrane was then treated with a 1% aqueous solution of potassium persulfate maintained at pH 8 by a potassium phosphate buffer for 30 minutes, and then dried in an oven at a temperature of 140°C for 5 minutes. The performances of the membrane were determined as described in Comparative Example 1, and the results were shown in Table 4.

**Table 4. Performances of RO Membranes as Prepared in Examples 12-17**

| Items | Ex. 12 | Ex. 13 | Ex. 14 | Ex. 15 | Ex. 16 | Ex. 17 |
|---|---|---|---|---|---|---|
| Total concentration of acid chloride | 0.1 | 0.1 | 0.1 | 0.1 | 0.1 | 0.1 |
| Relative concentration of TMC in the acid chloride (%) | 0 | 80 | 70 | 50 | 40 | 30 |
| Relative concentration of 5-iodo-isophthaloyl chloride (%) | 100 | 20 | 30 | 50 | 60 | 70 |
| Initial salt rejection (%) | 98.6 | 99.3 | 99.3 | 99.2 | 99.1 | 99.0 |
| Initial water flux (GFD) | 20.5 | 24 | 23.5 | 23.3 | 22.1 | 21.5 |
| After treatment with NaClO | | | | | | |
| Salt rejection (%) | 97.3 | 98.1 | 98.4 | 98.8 | 98.6 | 98.1 |
| Water flux (GFD) | 41.2 | 34.3 | 32.1 | 28.7 | 28.2 | 28.8 |

It can be found from the data as shown in Table 4 that the oxidation resistance of the RO membranes was further improved by treatment with potassium persulfate.

### Example 18

An RO membrane was prepared according to the process as described in Example 15, except that the 5-iodo-isophthaloyl chloride was replaced by 2-iodo-terephthaloyl chloride. The performances of the membrane were determined as described in Comparative Example 1, and the results were shown in the following Table 5.

### Example 19

An RO membrane was prepared according to the process as described in Example 15, except that the 5-iodo-isophthaloyl chloride was replaced by 5-bromo-isophthaloyl chloride. The performances of the membrane were determined as described in Comparative Example 1, and the results were as shown in the following Table 5.

### Example 20

An RO membrane was prepared according to the process as described in Example 15, except that the m-phenylenediamine was replaced by 3,3-diamino cyclohexane. The performances of the membrane were determined as described in Comparative Example 1, and the results were as shown in the following Table 5.

**Table 5. Performances of RO Membranes as Prepared in Examples 18-20**

| Items | Example 18 | Example 19 | Example 20 |
|---|---|---|---|
| Initial salt rejection (%) | 99.1 | 98.7 | 98.9 |
| Initial water flux (GFD) | 25.3 | 22.8 | 26.8 |
| After treatment with NaClO | | | |
| Salt rejection (%) | 98.5 | 97.0 | 96.1 |
| Water flux (GFD) | 33.4 | 34.4 | 44.9 |

### Examples 21-25

RO membranes were prepared according to the process as described in Example 15, except that the treatment with potassium persulfate was preformed for different time as shown in the following Table 6. The performances of the membranes were determined as described in Comparative Example 1, and the results are as shown in Table 6.

**Table 6. Performances of RO Membranes as prepared in Examples 21-25**

| Items | Ex. 21 | Ex. 22 | Ex. 23 | Ex. 24 | Ex. 25 |
|---|---|---|---|---|---|
| Time for treatment with potassium persulfate (min) | 10 | 20 | 40 | 80 | 120 |
| Initial salt rejection (%) | 99.2 | 99.1 | 99.2 | 99.0 | 99.0 |
| Initial water flux (GFD) | 21.8 | 23.7 | 24.3 | 24.1 | 25.5 |
| After treatment with NaClO | | | | | |
| Salt rejection (%) | 98.6 | 98.4 | 98.7 | 98.3 | 98.2 |
| Water flux (GFD) | 28.3 | 30.1 | 29.7 | 32.4 | 35.8 |

It can be found from the data as shown in Table 6 that the oxidation resistance of the RO membranes was further improved by treatment with potassium persulfate.

### Examples 26-31

RO membranes were prepared according to the process as described in Example 15, except that the treatment was preformed with an aqueous solution of potassium persulfate at different concentrations as shown in the following Table 7. The performances of the membranes were determined as described in Comparative Example 1, and the results were as shown in Table 7.

**Table 7. Performances of RO Membranes as Prepared in Examples 26-31**

| Items | Ex. 26 | Ex. 27 | Ex. 28 | Ex. 29 | Ex. 30 | Ex. 31 |
|---|---|---|---|---|---|---|
| Concentration of potassium persulfate in the solution (%) | 0.5 | 1.5 | 3.0 | 5.0 | 8.0 | 10.0 |
| Initial salt rejection (%) | 98.8 | 98.9 | 99.1 | 99.2 | 99.0 | 99.0 |
| Initial water flux (GFD) | 21.1 | 23.8 | 24.7 | 25.3 | 25.8 | 25.5 |
| After treatment with NaClO | | | | | | |
| Salt rejection (%) | 98.5 | 98.4 | 98.6 | 98.3 | 98.2 | 98.0 |
| Water flux (GFD) | 30.8 | 32.3 | 30.5 | 32.7 | 32.9 | 36.3 |

It can be found from the data as shown in Table 7 that the oxidation resistance of the RO membranes was further improved by treatment with potassium persulfate at different concentrations, especially at the concentration of 0.5-3.0%.

It should be understood that although the present invention has been specifically disclosed by preferred embodiments and optional features, modification and variation of the concepts herein disclosed may be resorted to by those skilled in the art, and that such modifications and variations are considered to be falling within the scope of the invention.

## Claims

1. A reverse osmosis membrane, comprising:
a) a porous support, and
b) a polyamide layer formed on the support,
wherein the polyamide layer is modified by an agent so that the membrane retains a salt rejection of at least 85% after being subjected to an aqueous solution of NaClO having a concentration of about 2,000 to 30,000ppm for about one hour.

2. A reverse osmosis membrane, comprising:
a) a porous support, and
b) a polyamide layer formed on the support,
wherein the polyamide layer is modified by a persulfate.

3. The reverse osmosis membrane of claim 2, wherein the persulfate is an inorganic persulfate.

4. The reverse osmosis membrane of claim 3, wherein the inorganic persulfate is selected from alkali metal persulfates and ammonium persulfate.

5. The reverse osmosis membrane of claim 3 or 4, wherein the inorganic persulfate is in the form of a 0.5-10wt% aqueous solution of potassium persulfate.

6. The reverse osmosis membrane of claim 5, wherein the inorganic persulfate is in the form of a 0.5-3wt% aqueous solution.

7. The reverse osmosis membrane of any one of claims 2-6, wherein the polyamide layer is formed by a reaction of a polyfunctional amine with a polyfunctional acid halide reagent comprising a polyfunctional haloaryl acid halide.

8. The reverse osmosis membrane of claim 7, wherein the polyfunctional haloaryl acid halide is a polyfunctional halophenyl acid chloride.

9. The reverse osmosis membrane of claim 8, wherein the polyfunctional halophenyl acid chloride is selected from the group consisting of 5-iodo-isophthaloyl chloride, 2-iodo-terephthaloyl chloride, 5-bromo-isophthaloyl chloride, 2-bromo-terephthaloyl chloride and a mixture thereof.

10. The reverse osmosis membrane of any one of claims 7-9, wherein the polyfunctional haloaryl acid halide is about 20-70wt% of the polyfunctional acid halide reagent.

11. A reverse osmosis membrane, comprising:
a) a porous support, and
b) a polyamide layer formed on the porous support,
wherein the polyamide layer is formed by a reaction of a polyfunctional amine with a polyfunctional acid halide reagent comprising a polyfunctional haloaryl acid halide.

12. The reverse osmosis membrane of claim 11, wherein the polyfunctional haloaryl acid halide is as defined in any one of claims 8-10.

13. A process for preparing a reverse osmosis membrane according to claim 1, comprising:
i) providing a porous support,
ii) forming a polyamide layer on the support, and
iii) modifying the polyamide layer with an agent.

14. A process for preparing a reverse osmosis membrane, comprising:
i) providing a porous support,
ii) providing a polyamide layer on the support, and
iii) modifying the polyamide layer with a persulfate.

15. The process of claim 14, wherein the persulfate is as defined in any one of claims 3-6.

16. The process of claim 14 or 15, wherein the modification is carried out for about 10-120 minutes.

17. A process for preparing a reverse osmosis membrane, comprising:
i) providing a porous support, and
ii) forming a polyamide layer on the support by a reaction of a polyfunctional amine with a polyfunctional acid halide reagent comprising a polyfunctional haloaryl acid halide.

18. The process of claim 17, wherein the polyfunctional haloaryl acid halide is as defined in any one of claims 8-10.

19. The process of claim 17 or 18, further comprising:
iii) modifying the polyamide layer with a persulfate.

20. The process of claim 19, wherein the persulfate is as defined in any one of claims 3-6.

21. A process for improving performances of a reverse osmosis membrane having a polyamide layer, comprising modifying the polyamide layer with a persulfate.

22. The process of claim 21, wherein the persulfate is as defined in any one of claims 3-6.

23. The process of claim 21 or 22, wherein the modification is carried out for about 10-120 minutes.
